# EUROPÄISCHE PATENTSCHRIFT

(11) **EP 3 626 617 B1**
(45) Veröffentlichungstag und Bekanntmachung des Hinweises auf die Patenterteilung: **18.05.2022**
(21) Anmeldenummer: 18196096.4
(22) Anmeldetag: 21.09.2018
(51) Int. Cl.: B64D 11/06, B64D 11/00, B60N 2/00

(54) **SITZSYSTEM FÜR EIN PASSAGIERFLUGZEUG UND VERFAHREN**
SEAT SYSTEM FOR A PASSENGER AIRCRAFT AND METHOD
SYSTÈME DE SIÈGE POUR AVION DE TRANSPORT DE PERSONNES ET PROCÉDÉ

(43) Veröffentlichungstag der Anmeldung: 25.03.2020
(73) Patentinhaber: Aircraft Cabin Modification GmbH, 87700 Memmingen (DE)
(72) Erfinder: Noshari, Arash, 22605 Hamburg (DE)
(74) Vertreter: Vossius & Partner Patentanwälte Rechtsanwälte mbB

(56) Entgegenhaltungen:
- DE-A1-102014 223 629
- US-A1- 2004 122 575
- US-A1- 2015 351 692
- US-A1- 2017 283 086

## Beschreibung

Die vorliegende Erfindung betrifft ein Sitzsystem für ein Passagierflugzeug und ein Verfahren zum Betreiben eines Sitzsystems. Üblicherweise wird ein Passagierflugzeug oft als Transportmittel gewählt, wenn es darum geht, lange Distanzen zurückzulegen. Trotz der hohen, üblichen Fluggeschwindigkeit müssen deswegen häufig etliche Stunden von den Menschen in dem Passagierflugzeug verbracht werden. Entsprechend gibt es einen hohen Bedarf, diese Reisezeit komfortabel zu verbringen. Fluggesellschaften, bei welchen das Reiseerlebnis als besonders komfortabel empfunden wird, werden von Passagieren deswegen üblicherweise bevorzugt.

Gleichzeitig ist es jedoch notwendig, die Kosten für einen Flug gering zu halten. Dies kann zum einen durch eine hohe Anzahl Passagiere erreicht werden, wodurch jedoch der individuelle Platz pro Passagier in dem Flugzeug sehr klein ist. Ein weiterer wichtiger Kostentreiber ist das Flugzeuggewicht. Entsprechend sind Fluggesellschaften bestrebt, besonders leichte und kleine Sitze in ihren Flugzeugen zu verbauen, um kosteneffizient operieren zu können. Damit geht jedoch häufig einher, dass solche Sitze für längeres Sitzen als unbequem empfunden werden. Als Folge davon kann das Reisen mit einem solchen Passagierflugzeug bzw. längeres Sitzen auf solchen Sitzen durch die jeweiligen Passagiere als unkomfortabel wahrgenommen werden.

Dabei ist zu beachten, dass der menschliche Körper für längeres Sitzen nicht ausgelegt ist.

Durch längere Flugreisen kann deshalb auch eine nicht unerhebliche gesundheitliche Belastung entstehen. Beispielsweise kann langes Sitzen in einer im Wesentlichen unveränderten Position eine Wahrscheinlichkeit für Thrombosen wenigstens temporär erhöhen. Zudem kann jeder Passagier ein unterschiedliches Sitzverhalten haben, wobei gewisse Verhaltensweisen für den Menschen eine größere gesundheitliche Belastung darstellen können und/oder bei jeweiligen Sitzen unbequemer sein können, als andere Verhaltensweisen.

In der DE 10 2006 042 299 A1 ist ein Sitzbelegungssensor in einem Sitzkissen eines Sitzelements eines Passagierflugzeugs beschrieben, mittels welchem ein Sitzbelegungszustand erfasst wird. Dieser Sitzbelegungssensor kann dabei die Sicherheit erhöhen, da beispielsweise schneller überprüft werden kann, ob ein Passagier angeschnallt ist. Der Reisekomfort kann für jeweilige Passagiere so aber nicht erhöht werden.

In der DE 10 2014 223 629 Alwird eine Kameraanordnung in einem Fahrzeug beschrieben, mittels welcher eine Trainingsfunktion bereitgestellt werden kann.

Die US 2015/351692 A1 beschreibt eine anpassbare Sitzanordnung. Falls erfasst wird, dass ein Passagier nicht gleichmäßig sitzt, wird ein Luftdruck in Luftpolster ausgeglichen, um ein ausgeglichene Sitzposition des Passagiers zu erreichen.

Aufgabe der vorliegenden Erfindung ist es, den Reisekomfort in einem Passagierflugzeug zu verbessern.

Diese Aufgabe wird erfindungsgemäß jeweils durch die Gegenstände der unabhängigen Patentansprüche gelöst. Vorteilhafte Ausgestaltungen mit zweckmäßigen Weiterbildungen der Erfindung sind in den jeweiligen Unteransprüchen angegeben, wobei vorteilhafte Ausgestaltungen eines Aspekts als vorteilhafte Ausgestaltungen jeweiliger anderer Aspekte und umgekehrt anzusehen sind.

Ein erster Aspekt der Erfindung betrifft ein Sitzsystem für ein Passagierflugzeug nach Anspruch 1.

In weiterer vorteilhafter Ausgestaltung des Sitzsystems gemäß dem ersten Erfindungsaspekt ist es vorgesehen, dass das Anzeigegerät als ein mobiles Endgerät, insbesondere Smartphone, des Passagiers, als Bildschirm eines Infotainment-Systems, welches dem jeweiligen Flugzeugsitz zugeordnet ist, und/oder als Bildschirm eines Kabinenkontrollsystems ausgebildet ist.

In weiterer vorteilhafter Ausgestaltung des Sitzsystems gemäß dem ersten Erfindungsaspekt ist es vorgesehen, dass die Auswertvorrichtung als ein mobiles Endgerät, insbesondere Smartphone, des Passagiers, als Recheneinheit eines Infotainment-Systems, welches dem jeweiligen Sitz zugeordnet ist, und/oder als Recheneinheit eines Kabinenkontrollsystems ausgebildet ist. So kann erneut auf zusätzlich in der Flugzeugkabine zu installierende Geräte verzichtet werden. Insbesondere kann das Smartphone als Anzeigegerät und Auswertvorrichtung ausgebildet sein. Durch die Nutzung des Smartphones als Auswertvorrichtung kann insbesondere der Datenschutz für den Passagier hoch sein, da die Auswertung lediglich durch ein für ihn persönlich zugängliches Gerät erfolgen kann.

In weiterer vorteilhafter Ausgestaltung des Sitzsystems gemäß dem ersten Erfindungsaspekt ist es vorgesehen, dass die Auswertvorrichtung dazu ausgebildet ist, in Abhängigkeit von der erfassten Sitzbelastung eine Sitzhaltung zu bestimmen. Vorzugsweise ist die Auswertvorrichtung ferner dazu ausgebildet, in Abhängigkeit von der bestimmten Sitzhaltung die Empfehlung für die Veränderung der Sitzhaltung zu bestimmen und/oder ist das wenigstens eine Anzeigegerät dazu ausgebildet, die von der Auswertvorrichtung bestimmte Sitzhaltung grafisch anzuzeigen. Dadurch können Empfehlungen zu der Veränderung der Sitzhaltung erstellt werden, welche für den Passagier besonders komfortabel sind. Zudem ist eine Auswertung jeweiliger gespeicherter Daten so erleichtert, um das Sitzsystem und/oder dessen Empfehlungen zu verbessern. Auch die Nachvollziehbarkeit der Empfehlungen ist so für den Passagier erhöht. Insbesondere ist es für den Passagier so möglich, zu erkennen, welche Sitzhaltungen für ihn nachteilig sind und diese grundsätzlich zu vermeiden.

In weiterer vorteilhafter Ausgestaltung des Sitzsystems gemäß dem ersten Erfindungsaspekt ist es vorgesehen, dass das Sitzsystem eine Speichervorrichtung umfasst, welche dazu ausgebildet ist, die erfasste Sitzbelastung, die bestimmte Sitzhaltung, den Verlauf der erfassten Sitzbelastung, den Verlauf der bestimmten Sitzhaltung und/oder jeweilige Empfehlungen zur Veränderung der Sitzhaltung zu speichern. Vorzugsweise ist das Anzeigegerät dazu ausgebildet, die gespeicherte Sitzbelastung, die gespeicherte Sitzhaltung, den gespeicherten Verlauf der erfassten Sitzbelastung, den gespeicherten Verlauf der bestimmten Sitzhaltung und/oder jeweilige Empfehlungen zur Veränderung der Sitzhaltung anzuzeigen.

In weiterer vorteilhafter Ausgestaltung des Sitzsystems gemäß dem ersten Erfindungsaspekt ist es vorgesehen, dass eine jeweilige Empfehlung für die Veränderung der Sitzhaltung einen Wechsel in eine andere Sitzhaltung, einen Wechsel in eine neue Sitzhaltung, insbesondere in eine vorbestimmte Sitzhaltung und/oder in eine in Abhängigkeit von der bisherigen Sitzhaltung des Passagiers ermittelte neue Sitzhaltung, ein Verlassen des Flugzeugsitzes und/oder eine Bewegungsabfolge umfasst.

In weiterer vorteilhafter Ausgestaltung des Sitzsystems gemäß dem ersten Erfindungsaspekt ist es vorgesehen, dass die Sensorvorrichtung dazu ausgebildet ist, als Sitzbelastung wenigstens eine Kraft an zwei unterschiedlichen Stellen zu erfassen.

In weiterer vorteilhafter Ausgestaltung des Sitzsystems gemäß dem ersten Erfindungsaspekt ist es vorgesehen, dass die Sensorvorrichtung wenigstens einen Sensor umfasst, welcher in einem Rückenteil, einem Sitzteil und/oder einer Armlehne des Sitzes angeordnet ist. Das Rückenteil kann auch als Rückenlehne bezeichnet werden und optional einen Kopfstütze mit umfassen. Dadurch kann die Sitzbelastung besonders gut erfasst werden. Vorzugsweise sind jeweilige Sensoren in einer Ausnehmung einer Schaumstoffschicht des Sitzes und/oder als eine Sensorschicht zwischen der Schaumstoffschicht und einer Deckschicht des Sitzes angeordnet.

In weiterer vorteilhafter Ausgestaltung des Sitzsystems gemäß dem ersten Erfindungsaspekt ist es vorgesehen, dass das Sitzsystem einen Datenverarbeitungsmodul, insbesondere ausgebildet als A/D-Wandler, umfasst, mittels welchem Sensordaten der Sensorvorrichtung zur Verarbeitung durch die Auswertvorrichtung und/oder zur Anzeige durch das Anzeigegerät umgewandelt werden, insbesondere von einem analogen Sensorsignal in ein digitales Sensorsignal. Das Datenverarbeitungsmodul kann in einer Schaumstoffschicht des Sitzes angeordnet sein oder beispielsweise in oder an einer Rückenlehne. Das Datenverarbeitungsmodul kann die Stromversorgungsvorrichtung der Sensorvorrichtung nutzen und/oder auch als Teil der Sensorvorrichtung ausgebildet sein. Das Datenverarbeitungsmodul kann auch eine separate Stromversorgungsvorrichtung, wie eine Knopfzelle, aufweisen oder dafür ausgebildet sein, mit dem Boardnetz des Flugzeugs verbunden zu werden.

In weiterer vorteilhafter Ausgestaltung des Sitzsystems gemäß dem ersten Erfindungsaspekt ist es vorgesehen, dass das Sitzsystem für eine kabelgebundene Datenübertragung zwischen der Sensorvorrichtung, dem Anzeigegerät, der Auswertvorrichtung, und/oder dem Speichergerät ausgebildet ist, insbesondere zur Verbindung mit einer Datenübertragung über ein Datenübertragungsnetz des Infotainment-Systems. Alternativ oder zusätzlich kann das Sitzsystem für eine kabellose Datenübertragung zwischen der Sensorvorrichtung, dem Anzeigegerät, der Auswertvorrichtung, und/oder dem Speichergerät ausgebildet sein, insbesondere mittels des Bluetooth Standards, dem Bluetooth Low Energy Standard, mittels WLAN, insbesondere in bestimmten Frequenzbänder, und/oder mittels RFID. Die Datenübertragung mittels Bluetooth Low Energy Standard hat einen besonders geringen Energieverbrauch und kann damit besonders wartungsarm sein. Die Datenübertragung mittels WLAN hat eine besonders hohe Reichweite, kann ein bestehendes Board-WLAN nutzen und eignet sich insbesondere für Datenübertragung für zentrales Speichern, Anzeigen und/oder Auswerten. Die Reichweite der Datenübertragung kann durch jeweilige Repeater in der Flugzeugkabine erhöht werden und/oder eine begrenzte Reichweite durch jeweilige Gateways, beispielsweise mit fester Verkabelung oder ebenfalls weiterer kabelloser Datenübertragung, in der Flugzeugkabine kompensiert werden. So ist die Übermittlung über weite Distanzen, zum Beispiel an das Kabinenkontrollsystem, gut möglich und/oder Übertragung mehrerer Flugzeugsitze und deren entsprechenden zugeordneten Sensorvorrichtungen kann gebündelt werden.

Ein zweiter Aspekt der Erfindung betrifft ein Verfahren zum Betreiben eines Sitzsystem für ein Passagierflugzeug nach Anspruch 13.

Der Verfahren gemäß dem zweiten Erfindungsaspekt eignet sich dabei zum Betreiben des Sitzsystems gemäß dem ersten Erfindungsaspekt. Die sich aus dem Sitzsystem gemäß dem ersten Erfindungsaspekt ergebenden Merkmale und Vorteile sind der Beschreibung des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

In weiterer vorteilhafter Ausgestaltung kann bei dem Verfahren gemäß dem zweiten Erfindungsaspekt eine jeweilige Empfehlung für die Veränderung der Sitzhaltung einen Wechsel in eine andere Sitzhaltung, einen Wechsel in eine neue Sitzhaltung, insbesondere in eine vorbestimmte Sitzhaltung und/oder in eine in Abhängigkeit von der bisherigen Sitzhaltung des Passagiers ermittelte neue Sitzhaltung, ein Verlassen des Sitzes und/oder eine Bewegungsabfolge umfassen. Durch diese jeweiligen Empfehlungsarten kann der Passagier für ein besonders vorteilhaftes Sitzverhalten hinsichtlich Komfort und Gesundheit instruiert werden.

### FIGURENBESCHREIBUNG

Fig. 1 veranschaulicht in einer schematischen Ansicht ein Sitzsystem für ein Passagierflugzeug.
Fig. 2 veranschaulicht in einem schematischen Flussdiagramm die Funktionsweise des Sitzsystems gemäß Fig. 1.
Fig. 3 zeigt in einer schematischen Perspektivansicht einen Flugzeugsitz.
Fig. 4 zeigt in einer schamtischen Schnittansicht ein Polster des Flugzeugsitzes gemäß Fig. 3.

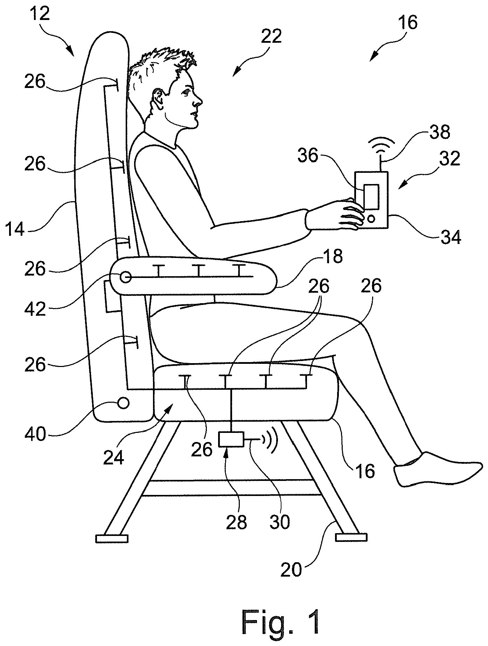

Fig. 1 veranschaulicht in einer schematischen Ansicht ein Sitzsystem 10 für ein Passagierflugzeug, welches einen Flugzeugsitz 12 aufweist. Der Flugzeugsitz 12 kann auch als Sitz 12 bezeichnet werden und umfasst dabei ein Rückenteil 14, welches auch als Rückenlehne bezeichnet werden kann, ein Sitzteil 16 und jeweilige Armlehnen 18. Das Rückenteil 14 umfasst dabei integriert eine Kopfstütze, welche hier auch als Teil der Rückenlehne angesehen werden kann. Der Flugzeugsitz 12 ist dabei lösbar mittels eines Gestells 20 an einem Boden der Passagierkabine des Passagierflugzeugs befestigt.

Auf dem Flugzeugsitz 12 sitzt ein Passagier 22 in einer bestimmten Sitzhaltung. Vorliegend ist beispielsweise dargestellt, wie der Passagier 22 an der Rückenlehne angelehnt ist und mindestens mit dem Ellenbogen eines seiner Arme auf der dargestellten Armlehne 18 aufgestützt ist. Auch der Kopf des Passagiers 22 ist an dem Rückenteil 14 angelehnt. Zudem sitzt der Passagier 22 auf dem Sitzteil 16, wobei ein Sitzschwerpunkt weit hinten Richtung dem Rückenteil 14 gegeben ist. Der Passagier 22 könnte aber auch anders auf dem Flugzeugsitz 12 sitzen. Beispielsweise könnte der Passagier 22 nach vorne gelehnt sein, sodass sein Rücken und Kopf das Rückenteil 14 nicht mehr berühren und ein Sitzschwerpunkt auf dem Sitzteil 16 nahe eines dem Rückenteil 14 abgewandten Ende verlagert ist.

Das Sitzsystem 10 umfasst dabei eine Sensorvorrichtung 24, welche dazu ausgebildet ist, eine Sitzbelastung des Flugzeugsitzes 12 durch den darauf sitzenden Passagier 22 zu erfassen. Die jeweilige Sitzbelastung ergibt sich dabei durch eine jeweilige Sitzhaltung und entspricht beispielsweise einer nach Bereichen aufgelösten Druckbelastung einer Rückenfläche des Rückenteils 14, einer Sitzfläche des Sitzteils 16 und einer Auflagefläche jeweiliger Armlehnen 18. Vorliegend kann also beispielsweise mittels der Sensorvorrichtung 24 erfasst werden, wo der Sitzschwerpunkt auf dem Sitzteil 16 ist und welche Kraft dabei auf das Sitzteil 16 wirkt. Gleiches kann für das Rückenteil 14 und jeweilige Armlehnen 18 erfasst werden.

Für diese Erfassung weist die Sensorvorrichtung 26 beispielsweise eine Vielzahl von voneinander beabstandeten Sensoren 26 auf. Die Sensoren 26 können beispielsweise als flächige textile Sensoren ausgebildet sein, welche die darauf wirkende Kraft durch eine Kapazitätsänderung oder Widerstandsänderung erfassen können. Solche textile Sensoren können dabei auch selber dazu ausgebildet sein, eine darauf wirkende Kraftverteilung zu erfassen, um die Sitzbelastung besonders genau bestimmen zu können. Optional kann dann auch beispielsweise ein Sensor 26 pro Sitzteil 16, Rückenteil 14 und Armlehne 18 vorgesehen sein und sich beispielsweise über im Wesentlichen die gesamte Sitzfläche, Rückenfläche und Auflagefläche erstrecken. Dadurch kann die Sitzbelastung besonders hochauflösend und genau erfasst werden. Durch - wie vorliegend gezeigt - mehrere voneinander beabstandete Sensoren 26 pro Sitzfläche, Rückenfläche und Auflagefläche kann die Sensorvorrichtung 24 besonders leicht sein. Jeweilige Werte bzw. Belastungen zwischen den Sensoren 26 können dabei beispielsweise gemittelt werden.

Die Sensoren 26 können beispielsweise durch einen Energiespeicher, wie eine Batterie, welche in oder an dem Flugzeugsitz 12 angeordnet ist, mit Strom versorgt werden. Alternativ oder zusätzlich können die jeweiligen Sensoren 26 auch an ein Boardnetz, beispielsweise eine Stromversorgung von Teilen eines Infotainment-Systems des Passagierflugzeugs, angeschlossen sein und darüber mit Strom versorgt werden. Alternativ können auch jeweilige Sensoren 26 verwendet werden, welche keinen Strom zum Erzeugen eines Sensorsignals benötigen. Beispielsweise können Piezosensoren verwendet werden, welche bei Druckbelastung ohne Stromquelle eine elektrische Spannung erzeugen kann. Eine solche Sensorvorrichtung 24 kann besonders wartungsarm sein.

Die Sensoren 26 sind dabei mit jeweiligen Leitungen mit einer zentralen Sendevorrichtung 28 verbunden, welche beispielsweise einen Sender 30 umfasst, welcher dazu ausgebildet ist, Sensorsignale mittels des Bluetooth-Low-Energy Standards zu verschicken. Die Sendevorrichtung 28 kann dabei jeweilige analoge Sensorsignale mittels eines integrierten A/D-Wandlers in digitale Signale umwandeln.

Mittels der Sendevorrichtung 28 können jeweilige Sensorsignale und damit die erfasste Sitzbelastung an eine Auswertvorrichtung 32 gesendet werden, welche vorliegend als Smartphone 34 des Passagiers 22 ausgebildet ist. Das Smartphone 34 umfasst dabei auch ein Anzeigegerät 36 in Form eines Bildschirms, einen Empfänger 38 zum Empfangen der von der Sendevorrichtung 28 übertragenen Sensorsignale und einen nicht dargestellten Massenspeicher.

Das Smartphone 34 bzw. die Auswertvorrichtung 32 ist dabei dazu ausgebildet, in Abhängigkeit von der erfassten Sitzbelastung eine Empfehlung für eine Veränderung der Sitzhaltung des Passagiers 22 zu bestimmen. Dafür kann das Smartphone 34 beispielsweise ein Programm, welches auch als App bezeichnet werden kann, ausführen, mittels welchem die Sensorsignale mit einem tabellarischen Vergleich ausgewertet werden, um zu bestimmen, ob eine Veränderung der Sitzhaltung für den Passagier 22 hinsichtlich Komfort oder gesundheitlichen Auswirkungen vorteilhaft ist. Dabei kann auch bestimmt werden, in welche Sitzhaltung der Passagier 22 vorteilhafterweise wechseln sollte.

Die so bestimmte Empfehlung kann dabei auf dem Anzeigegerät 36 mittels des Smartphone 34 angezeigt werden, beispielsweise in Form eines Piktogramms oder einer Animation. So kann der Passagier 22 dazu angeleitet werden, wie, wann und welche Sitzhaltungen dieser während eines Fluges einnehmen sollte, um den Sitzkomfort zu erhöhen und eine Gesundheitsbelastung durch langes Sitzen zu minimieren. Dadurch kann dem Passagier 22 auch geholfen werden, sein Sitzverhalten zu verbessern.

Mittels der erfassten Sitzbelastung kann die Auswertvorrichtung 32 auch eine derzeitige Sitzhaltung bestimmen und diese dem Passagier 22 auf dem Anzeigegerät 36 anzeigen. Dadurch kann das Verständnis für das Sitzverhalten erleichtert werden und dem Passagier 22 ggf. besser verdeutlicht werden, wie sein Sitzverhalten während des Fluges sein sollte.

Das Sitzsystem 10 kann auch einen zeitlichen Verlauf der Sitzbelastung und/oder Sitzhaltung erfassen und beispielsweise in dem Massenspeicher des Smartphone 34 speichern. Dadurch können auch zeitliche Faktoren, wie beispielsweise die Zeitdauer, in welcher der Passagier 22 in einer Sitzhaltung verharrt, bei der Bestimmung der Empfehlung berücksichtigt werden. Durch das Speichern können jeweilige erfasste Daten auch für spätere, umfangreichere und/oder für mehrere Passagiere akkumulierte Analysen genutzt werden.

Der Flugzeugsitz 12 kann auch eine Mechanik zum Verstellen einzelner Teile umfassen. Beispielsweise kann das Rückenteil 14 mittels eines Gelenks 40 an dem Gestell 20 gehalten sein, um eine Neigung der Rückenlehne verstellen zu können. Ebenso können jeweilige Armlehnen 18 mittels jeweils eines weiteren Gelenks 42 an dem Rückenteil 14 gehalten sein. Jeweilige Kabel zum Übertragen jeweiliger Sensordaten der Sensoren 26 können dabei durch diese Gelenke 40, 42 geführt sein, wie beispielsweise beim Gelenk 42 dargestellt.

Die Sensorvorrichtung 24 kann dabei dazu ausgebildet sein, die Stellung jeweiliger beweglicher bzw. verstellbarer Teile des Flugzeugsitzes 12 zu erfassen. Beispielsweise kann die Sensorvorrichtung 24 einen Stellungssensor umfassen, mittels welchem die Stellungen der jeweiligen Gelenke 40, 42 erfasst werden. Die erfasste Stellung jeweiliger beweglicher bzw. verstellbarer Teile des Flugzeugsitzes 12 kann dabei bei der Erfassung der Sitzbelastung und/oder der Bestimmung der derzeitigen Sitzhaltung von der Auswertvorrichtung 32 mit berücksichtigt werden. Dadurch kann hier die Genauigkeit verbessert werden. Zudem kann auch die Empfehlung zur Veränderung der Sitzhaltung mit in Abhängigkeit der erfassten Stellung jeweiliger beweglicher bzw. verstellbarer Teile des Flugzeugsitzes 12 von der Auswertvorrichtung 32 bestimmt werden. Die Empfehlung kann dabei dann auch eine Empfehlung zum Verstellen jeweiliger beweglicher bzw. verstellbarer Teile des Flugzeugsitzes 12 mit umfassen oder beispielsweise auch nur die Einnahme solcher Sitzhaltungen empfehlen, welche keine Verstellung dieser Teile erfordert.

Das Smartphone 34 kann optional auch dazu ausgebildet sein, jeweilige erfasste Daten und/oder Empfehlungen an einen zentralen Server zu senden, um diese auch dort zu speichern. So stehen diese gespeicherten Informationen der Fluggesellschaft zur weiteren Nutzung zur Verfügung und/oder können zentral eingesehen werden, beispielsweise durch jeweilige Flugbegleiter in einem Kabinenkontrollsystem. Dadurch kann auch eine Sitzbelegung mit erfasst werden. Das Sitzsystem 10 kann darüber hinaus auch mehrere Flugzeugsitze 12 mit jeweils zugeordneten Sensorvorrichtungen 24 umfassen, wobei jeweilige Daten und/oder jeweilige Empfehlungen eines individuellen Passagiers nur diesem auf seinem Smartphone zugänglich gemacht werden können.

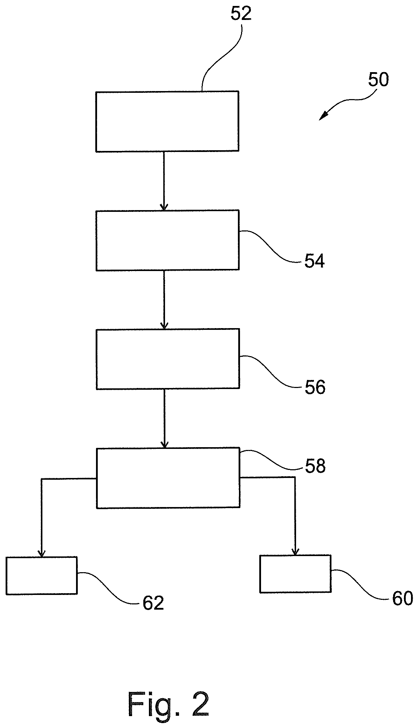

Fig. 2 veranschaulicht in einem schematischen Flussdiagramm 50 die Funktionsweise des Sitzsystems 10 gemäß Fig. 1. Block 52 veranschaulicht die Übertragung erfasster Sensordaten - also Signale, welche Rückschlüsse auf die Sitzbelastung zulassen bzw. diese erfassen - als elektrische Signale von den Sensoren an den A/D-Wandler des Datenübetragungsmoduls bzw. die Sendevorrichtung 28. In Block 54 wird die Umwandlung dieser analogen elektrischen Signale in digitale Signale und in Block 56 deren Übertragung an die Auswertvorrichtung 32 veranschaulicht, wobei die Übertragung vorzugsweise kabellos erfolgt. Die Auswertung der übertragenen Daten wird in Block 58 veranschaulicht, wobei in diesem Schritt anhand der erfassten Sitzbelastung und optional zusätzlich deren zeitlichen Verlauf, welche auch als Sitzhistorie bezeichnet wird, mittels der Auswertvorrichtung 32 eine Empfehlung für eine Veränderung der Sitzhaltung des Passagiers 22 bestimmt wird. Diese Empfehlung kann dabei auch eine Art Prognose umfassen, beispielsweise dass dem Passagier 22 nach weiterem Verbleib einer vorbestimmten Zeitdauer in einer derzeitigen Sitzposition der Wechsel in eine andere, insbesondere vorbestimmte Position empfohlen wird.

Block 60 veranschaulicht dann, dass die Empfehlung an den Passagier 22 ausgegeben wird, beispielsweise in Form einer Animation auf dem Bildschirm seines Smartphones 34. Block 62 veranschaulicht, dass jeweilige ausgegebene Empfehlungen und/oder erfasste Sitzbelastungen und/oder Sitzhaltungen, insbesondere deren zeitlicher Verlauf, gespeichert werden, beispielsweise auf einem zentralen Server und/oder auf dem Smartphone 34 des jeweiligen Passagiers.

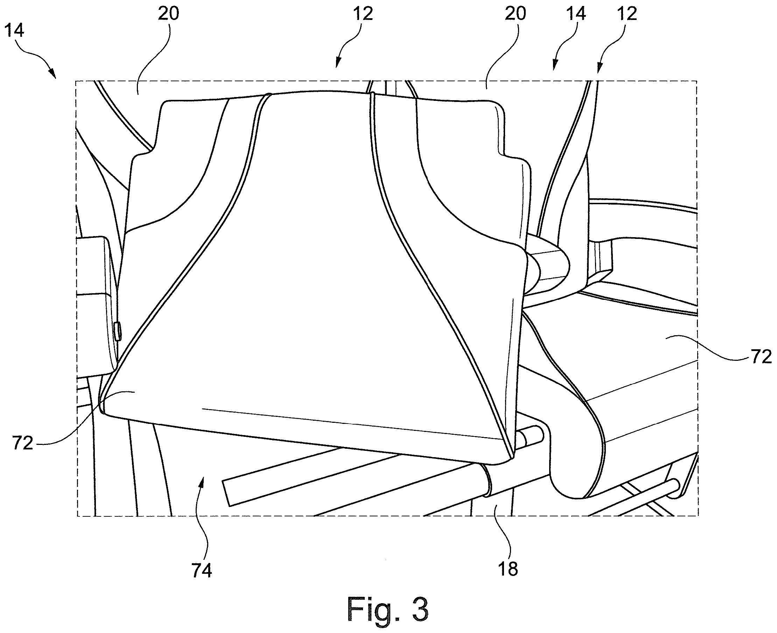

Fig. 3 zeigt in einer schematischen Perspektivansicht zwei des in Fig. 1 schematisch dargestellten Flugzeugsitzes 12 als eine Sitzreihe. Gut erkennbar ist dabei, dass das Rückenteil 14 ein Rückenpolster 70 aufweist und das Sitzteil 16 ein Sitzpolster 72. Bei dem in der Fig. 3 links dargestellten Flugzeugsitz 12 ist dabei das Sitzpolster 72 von dem Gestell 20 abgelöst. Ebenso kann auch das Rückenpolster 70 lösbar mit einem weiteren Teil des Gestells 20 verbunden sein.

Das Sitzpolster liegt normal auf einem Sitzbereich 74 des Gestells 20 auf, welcher bei dem links dargestellten Flugzeugsitz 12 zu erkennen ist. Jeweilige Sensoren 26 können beispielsweise zwischen dem Sitzpolster 72 und dem Sitzbereich 74 des Gestells 20 angeordnet sein. Beispielsweise kann der Sitzbereich 74 aber auch als Sitztrampolin ausgebildet sein, welches vorzugsweise ebenfalls eine gewisse Dämpfung durch eine wenigstens bereichsweise Elastizität bereitstellen kann. Im Bereich eines Sitztrampolins kann das Gestell 20 deshalb auch eine textile Fläche statt einer Kunststoff- oder Aluminiumplatte aufweisen. Dadurch kann ein entsprechender Sitz besonders leicht und platzsparend sein. Vorteilhafterweise kann zur weiteren Gewichtseinsparung der textile Bereich des Sitztrampolins durch einen textilen Sensor gebildet sein, sodass der Flugzeugsitz 12 des Sitzsystems 10 gegenüber herkömmlichen Sitzen kaum oder nur geringfügig schwerer ist.

Durch die lösbare Befestigung jeweiliger Polster des Flugzeugsitzes 12 können jeweilige Sensoren 26 und damit das Sitzsystem 10 bei bestehender Innen- und insbesondere Sitzausstattung des Passagierflugzeugs leicht nachgerüstet werden. Auch eine Wartung ist so vereinfacht.

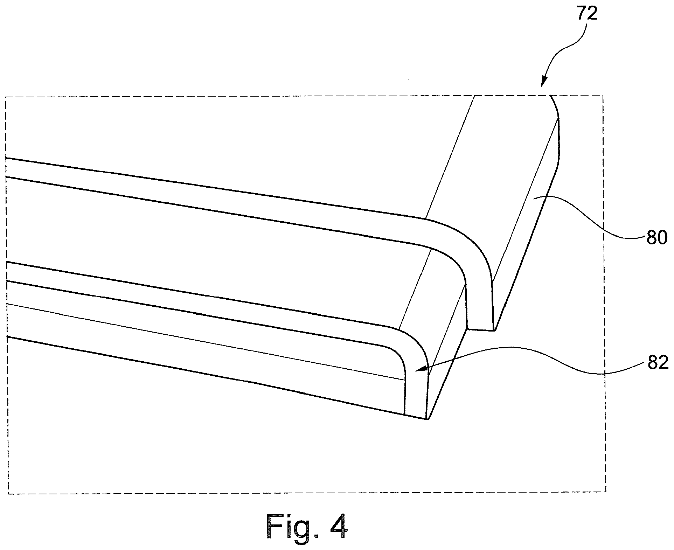

Fig. 4 zeigt in einer schematischen Schnittansicht einen beispielhaften Schichtaufbau des Sitzpolsters 72 des Flugzeugsitzes 12. Das Sitzpolster 72 weist dabei eine Deckschicht 80 und mehrere Schaumstoffschichten 82 als Kern auf. Die Schaumstoffschichten 82 stellen dabei hauptsächlich die Sitzdämpfung bereit, während die Deckschicht 80 den Kern abkapselt und vor Umwelteinflüssen schützt. Jeweilige Sensoren 26 und auch deren Verbindungskabel zur Sendevorrichtung 28 können dabei in einer Ausnehmung im Kern angeordnet sein und/oder auch zwischen den jeweiligen Schichten des Kerns des Sitzpolsters 72. So ist eine einfache Nachrüstung und/oder Modifikation bestehender Sitzpolsterkonstruktionen einfach möglich. Alternativ kann ein flächiger Sensor auch als jeweilige zusätzliche Schicht zwischen den Schaumstoffschichten 82 und/oder der Deckschicht 80 vorgesehen sein. Alternativ kann auch die Deckschicht 80 selber durch einen Sensor 26 ganz oder teilweise gebildet sein. Dafür eignet sich insbesondere ein textiler Sensor. In diesem Fall kann die Sitzbelastung besonders präzise erfasst werden, da jeweilige Polsterschichten eine Druckbelastung nicht dämpfen, flächig verteilen und/oder anderweitig verfälschen können.

Flugzeugsitze 12 gehören zu den wichtigsten komfortrelevanten Elementen eines jeden Passagierflugzeugs, weil sie im unmittelbaren Kontakt zum Passagier 22 stehen und der Passagier 22 die meiste Zeit seiner Flugreise auf dem Sitz verbringt. Inzwischen können aufgrund der modernen Langstreckenflugzeuge Non-Stop-Flugreisen von bis zu 18 Stunden durchgeführt werden, bei denen der Passagier 22 sich zum großen Teil in der Sitzposition befindet.

Das Sitzsystem 10 ermöglicht es dabei, dass der Passagier 22 Feedback zu seinem Sitzverhalten erhalten kann, insbesondere ob das Sitzverhalten schlecht und/oder ungesund ist. Der Passagier 22 kann dazu animiert werden, gesünder zu sitzen, wobei der Passagier 22 nicht mehr mühsam seine Sitzhaltung selbst kontrollieren muss.

Bedingt durch den ständigen Kostendruck sind Fluggesellschaften bestrebt Treibstoffverbräuche ständig zu reduzieren, wobei Gewichtsersparnisse in Flugzeugen ein entscheidendes Kriterium ist, um Treibstoffkosten zu senken. Dabei wurde in den letzten Jahren auch viel an den Sitzen und an den Sitzschäumen sowohl an Gewicht als auch an Material gespart. Das hat dazu geführt, dass heutige Flugzeugsitze eine sehr dünne Schicht an Sitzschaum besitzen, so dass eine größere Beanspruchung der Wirbelsäule und Muskeln des Passagiers 22 erfolgt. Ein intelligentes, selbstüberwachendes Sitzhaltung-ÜberwachungsSystem, wie es durch Sitzsystem 10 realisiert wird, vermag die Wirbelsäule und Muskeln des Passagiers zu entlasten, ein größeres Wohlbefinden des Passagiers 22 hervorzurufen und einen nachhaltig besseren Eindruck der Airline herbeizuführen. Gegebenenfalls sind durch ein angepasstes Sitzverhalten auch noch weitere Material- und Gewichtseinsparungen möglich. Jeweilige Empfehlungen des Sitzsystems 10 können deshalb an die spezifische Gestaltung des Flugzeugsitzes 12 angepasst sein, welcher gegebenenfalls in gewissen Sitzhaltungen bequemer ist und/oder langsamer verschleißt als in anderen Sitzhaltungen. Die deswegen vorteilhaften Sitzhaltungen können dabei bevorzugt oder ausschließlich empfohlen werden.

Eine nachhaltige Bindung des Passagiers 22 an die Airline kann dadurch erreicht werden, dass dem Passagier 22 auch in der Airline-App sein gesamtes Sitzverhalten während seiner letzten Flüge aufgezeigt wird, Hinweise und Anregungen zu einer Stärkung der Rückenmuskulatur gegeben werden und evtl. Verbesserungen oder Verschlechterungen der Sitzhaltung im Laufe der Zeit aufgezeigt werden. Auch dies kann mit dem Sitzsystem 10 leicht realisiert werden, da bereits die Auswertung des Sitzverhaltens mittels des Smartphones 34 des Passagiers 22 erfolgen kann.

Des Weiteren kann das Sitzsystem 10 dazu verwendet werden, die Sitzbelegung zu kontrollieren. In unruhigen Flugphasen, beispielsweise bei Turbulenzen, Start und/oder Landung, können jeweilige Flugbegleiter aus der Ferne, beispielsweise über eine spezielle App und/oder ein Kabinenkontrollsystem, erkennen, wenn ein Sitz trotz Anweisung verlassen wird. Insbesondere bei einer Kombination des Sitzsystems 10 mit dem sogenannten "Smart Belt" der Aircraft Cabin Modification GmbH ist eine zuverlässige Überwachung und Nachhaltung der Anschnallsituation eines Passagiers 22 während des gesamten Fluges möglich. Dazu können jeweilige Daten, wann ein Flugzeugsitz 12 belegt war mit jeweiligen Daten, wann ein Anschnallgurt geschlossen war, abgeglichen werden.

Das Sitzsystem 10 kann modular für jeweilige Flugzeugsitze eines Passagierflugzeugs eingebaut und/oder nachgerüstet werden. Das Sitzsystem 10 kann ein Sitz-Informationssystem zur Verfügung stellen, welches eine Übersicht über die Sitzhaltung jeweiliger Passagiere erfasst, diese graphisch darstellen kann und/oder jeweiligen Flugbegleitern die Sitzbelegung darstellen kann. Das Sitzsystem 10 ist deshalb aus gesundheits- und sicherheitstechnischen Gründen vorteilhaft. Es kann die gesundheitliche Belastung von Langstreckenflügen reduzieren und die Arbeitsbelastung für das Flugbegleitpersonal reduzieren sowie die Sicherheit an Bord steigern.

Zu diesem Zweck kann bei dem Sitzsystem 10 ein eindeutiges Signal, beispielsweise in Form des elektrischen Widerstandes jeweiliger Sensoren 26, generiert werden, welches Rückschlüsse auf die Kraftübertragung zwischen dem Passagier 22 und jeweiligen Flächen des Flugzeugsitzes 12, insbesondere dessen Sitzschaum, ermöglicht. Daraus kann das Sitzsystem 10 ableiten, ob der Fluggast eine korrekte und/oder gesunde Sitzhaltung eingenommen hat. Dazu können ein oder mehreren Sensoren 26 vorgesehen sein, die beispielsweise mechanisch oder als induktiver Näherungsschalter funktionieren und im Sitzschaum integriert sind. Durch die Messung z.B. des elektrischen Widerstandes im Sensor 26 kann dann beispielsweise erfasst werden, an welcher Stelle des Flugzeugsitzes 12 der Passagier 22 gerade seinen Schwerpunkt hat. Beispielsweise ist an einem nicht belasteten Bereich des Sitzschaumes der Widerstand gering, in einem belasteten Bereich hingegen hoch. Das Sitzsystem 10 und insbesondere einzelne Komponenten können dabei mit einem insbesondere sitzintegrierten In-Flight-Entertainment-System, welches auch als Infotainment-System bezeichnet werden kann, gekoppelt sein, beispielsweise zur Datenübertragung und/oder Stromversorgung. Teile des In-Flight-Entertainment-System können auch Teile des Sitzsystems 10 darstellen, beispielsweise können jeweilige Bildschirme als Anzeigegerät 32 fungieren. Alternativ oder zusätzlich können das Sitzsystem 10 und insbesondere einzelne Komponenten auch über eine autonome Energieversorgung verfügen, beispielsweise in Form einer Knopfzelle.

### BEZUGSZEICHENLISTE

- 10: Sitzsystem
- 12: Flugzeugsitz
- 14: Rückenteil
- 16: Sitzteil
- 18: Armlehne
- 20: Gestell
- 22: Passagier
- 24: Sensorvorrichtung
- 26: Sensor
- 28: Sendevorrichtung
- 30: Sender
- 32: Auswertvorrichtung
- 34: Smartphone
- 36: Anzeigegerät
- 38: Empfänger
- 40: Gelenk
- 42: Gelenk
- 50: Flussdiagramm
- 52: Block
- 54: Block
- 56: Block
- 58: Block
- 60: Block
- 62: Block
- 70: Rückenpolster
- 72: Sitzpolster
- 74: Sitzbereich
- 80: Deckschicht
- 82: Schaumstoffschichten

## Patentansprüche

1. Sitzsystem (10) für ein Passagierflugzeug, umfassend
- wenigstens einen Flugzeugsitz (12) mit wenigstens einer Sensorvorrichtung (24), welche dazu ausgebildet ist, eine Sitzbelastung des Flugzeugsitzes (12) durch einen darauf sitzenden Passagier (22) zu erfassen und einen zeitlichen Verlauf der erfassten Sitzbelastung aufzuzeichnen,
- eine Auswertvorrichtung (32), welche dazu ausgebildet ist, in Abhängigkeit von der erfassten Sitzbelastung eine Sitzhaltung zu bestimmen und in Abhängigkeit von der erfassten Sitzbelastung, der bestimmten Sitzhaltung und des erfassten Verlaufs der Sitzbelastung eine Empfehlung für eine Veränderung einer Sitzhaltung zu bestimmen, und
- ein Anzeigegerät (36), welches dazu ausgebildet ist, die Empfehlung anzuzeigen; wobei die Sensorvorrichtung (24) wenigstens einen als textilen Flächensensor ausgebildeten Sensor (26) umfasst, welcher eine darauf wirkende Kraft durch eine Kapazitätsänderung erfasst.

2. Sitzsystem (10) nach Anspruch 1, wobei das Anzeigegerät (36) als ein mobiles Endgerät, insbesondere Smartphone (34), des Passagiers (22), als Bildschirm eines Infotainment-Systems, welches dem jeweiligen Sitz zugeordnet ist, und/oder als Bildschirm eines Kabinenkontrollsystems ausgebildet ist.

3. Sitzsystem (10) nach einem der Ansprüche 1 oder 2, wobei die Auswertvorrichtung (32) als ein mobiles Endgerät, insbesondere Smartphone (34), des Passagiers, als Recheneinheit eines Infotainment-Systems, welches dem jeweiligen Flugzeugsitz (12) zugeordnet ist, und/oder als Recheneinheit eines Kabinenkontrollsystems ausgebildet ist.

4. Sitzsystem (10) nach einem der vorhergehenden Ansprüche, wobei das wenigstens eine Anzeigegerät (36) dazu ausgebildet ist, die von der Auswertvorrichtung (32) bestimmte Sitzhaltung grafisch anzuzeigen.

5. Sitzsystem (10) nach einem der vorhergehenden Ansprüche, wobei das Anzeigegerät (36) dazu ausgebildet ist, den zeitlichen Verlauf der erfassten Sitzbelastung anzuzeigen.

6. Sitzsystem (10) nach einem der vorhergehenden Ansprüche, wobei die Auswertvorrichtung (32) dazu ausgebildet ist, in Abhängigkeit von dem erfassten Verlauf der Sitzbelastung einen zeitlichen Verlauf der Sitzhaltung des Passagiers (22) zu bestimmen, und die Auswertvorrichtung (32) dazu ausgebildet ist, in Abhängigkeit von dem erfassten Verlauf der Sitzhaltung eine Empfehlung für eine Veränderung der Sitzhaltung zu bestimmen, und/oder wobei das Anzeigegerät (36) dazu ausgebildet ist, den zeitlichen Verlauf der bestimmten Sitzhaltung anzuzeigen.

7. Sitzsystem (10) nach einem der vorhergehenden Ansprüche, wobei das Sitzsystem (10) eine Speichervorrichtung umfasst, welche dazu ausgebildet ist, die erfasste Sitzbelastung, die bestimmte Sitzhaltung, den Verlauf der erfassten Sitzbelastung, den Verlauf der bestimmten Sitzhaltung und/oder jeweilige Empfehlungen zur Veränderung der Sitzhaltung zu speichern, und das Anzeigegerät (36) dazu ausgebildet ist, die gespeicherte Sitzbelastung, die gespeicherte Sitzhaltung, den gespeicherten Verlauf der erfassten Sitzbelastung, den gespeicherten Verlauf der bestimmten Sitzhaltung und/oder jeweilige Empfehlungen zur Veränderung der Sitzhaltung anzuzeigen.

8. Sitzsystem (10) nach einem der vorhergehenden Ansprüche, wobei eine jeweilige Empfehlung für die Veränderung der Sitzhaltung einen Wechsel in eine andere Sitzhaltung, einen Wechsel in eine neue Sitzhaltung, insbesondere in eine vorbestimmte Sitzhaltung, und/oder in eine in Abhängigkeit von der bisherigen Sitzhaltung des Passagiers (22) ermittelte neue Sitzhaltung, ein Verlassen des Sitzes (12) und/oder eine Bewegungsabfolge umfasst.

9. Sitzsystem (10) nach einem der vorhergehenden Ansprüche, wobei die Sensorvorrichtung (24) dazu ausgebildet ist, als Sitzbelastung wenigstens eine Kraft an zwei unterschiedlichen Stellen zu erfassen.

10. Sitzsystem (10) nach einem der vorhergehenden Ansprüche, wobei die Sensorvorrichtung (24) wenigstens einen Sensor (26) umfasst, welcher in einem Rückenteil (12), einem Sitzteil (14) und/oder einer Armlehne (18) des Sitzes (12) angeordnet ist, insbesondere in einer Ausnehmung einer Schaumstoffschicht (82) des Sitzes (12) und/oder als eine Sensorschicht zwischen der Schaumstoffschicht (82) und einer Deckschicht (80) des Sitzes (12) angeordnet.

11. Sitzsystem (10) nach einem der vorhergehenden Ansprüche, wobei das Sitzsystem (10) einen Datenverarbeitungsmodul, insbesondere ausgebildet als A/D-Wandler, umfasst, mittels welchem Sensordaten der Sensorvorrichtung (24) zur Verarbeitung durch die Auswertvorrichtung (32) und/oder zur Anzeige durch das Anzeigegerät (36) umgewandelt werden, insbesondere von einem analogen Sensorsignal in ein digitales Sensorsignal.

12. Sitzsystem (10) nach einem der vorhergehenden Ansprüche, wobei das Sitzsystem (10) für eine kabelgebundene Datenübertragung zwischen der Sensorvorrichtung (24), dem Anzeigegerät (36), der Auswertvorrichtung (32), und/oder dem Speichergerät ausgebildet, insbesondere zur Verbindung mit einer Datenübertragung über ein Datenübertragungsnetz des Infotainment-Systems ausgebildet ist, und/oder wobei das Sitzsystem (10) für eine kabellose Datenübertragung zwischen der Sensorvorrichtung (24), dem Anzeigegerät (36), der Auswertvorrichtung (32), und/oder dem Speichergerät ausgebildet, insbesondere mittels des Bluetooth Standards, dem Bluetooth Low Energy Standard, mittels WLAN, insbesondere in bestimmten Frequenzbändern, und/oder mittels RFID ausgebildet ist.

13. Verfahren zum Betreiben eines Sitzsystems (10) in einem Passagierflugzeug, umfassend wenigstens die Schritte:
- Erfassen einer Sitzbelastung eines Flugzeugsitzes (12) in einem Passagierflugzeug durch einen darauf sitzenden Passagier (22) mittels einer Sensorvorrichtung (24) und Aufzeichnen eines zeitlichen Verlaufs der erfassten Sitzbelastung,
- Bestimmen einer Sitzhaltung des Passagiers (22) und des zeitlichen Verlaufs der Sitzhaltung des Passagiers (22) in Abhängigkeit von der erfassten Sitzbelastung,
- Bestimmen einer Empfehlung für eine Veränderung einer Sitzhaltung des Passagiers (22) in Abhängigkeit von der erfassten Sitzbelastung, dem erfassten Verlauf der Sitzbelastung, der bestimmten Sitzhaltung und dem bestimmten Verlauf der Sitzhaltung, und
- Anzeigen der Empfehlung auf einem Anzeigegerät (36);
wobei die Sensorvorrichtung (24) wenigstens einen als textilen Flächensensor ausgebildeten Sensor (26) umfasst, welcher eine darauf wirkende Kraft durch eine Kapazitätsänderung erfasst.

14. Verfahren nach Anspruch 13, wobei eine jeweilige Empfehlung für die Veränderung der Sitzhaltung einen Wechsel in eine andere Sitzhaltung, einen Wechsel in eine neue Sitzhaltung und/oder in eine in Abhängigkeit von der bisherigen Sitzhaltung des Passagiers (22) ermittelte neue Sitzhaltung, ein Verlassen des Sitzes (12) und/oder eine Bewegungsabfolge umfasst.

## Claims

1. A seating system (10) for a passenger aircraft, comprising
- at least one aircraft seat (12) having at least one sensor device (24) which is configured to detect a seat load on the aircraft seat (12) by a passenger (22) sitting thereon and to record a temporal history of the detected seat load,
- an evaluation device (32) which is configured to determine a sitting posture depending on the detected seat load and to determine a recommendation for a change in a sitting posture depending on the detected seat load, the determined sitting posture and the detected history of the seat load, and
- a display device (36) which is configured to display the recommendation;
wherein the sensor device (24) comprises at least one sensor (26) configured as a textile surface sensor which detects a force acting thereon by a change in a capacitance.

2. The seating system (10) according to claim 1, wherein the display device (36) is configured as a mobile end device, in particular smartphone (34), of the passenger (22), as a screen of an infotainment system which is assigned to the respective seat and/or as a screen of a cabin control system.

3. The seating system (10) according to any one of claims 1 and 2, wherein the evaluation device (32) is configured as a mobile end device, in particular smartphone (34), of the passenger, as a computing unit of an infotainment system which is assigned to the respective aircraft seat (12) and/or as a computing unit of a cabin control system.

4. The seating system (10) according to any one of the preceding claims, wherein the at least one display device (36) is configured to graphically display the sitting posture determined by the evaluation device (32).

5. The seating system (10) according to any one of the preceding claims, wherein the display device (36) is configured to display the temporal history of the detected seat load.

6. The seating system (10) according to any one of the preceding claims, wherein the evaluation device (32) is configured to determine a temporal history of the sitting posture of the passenger (22) depending on the detected history of the seat load and the evaluation device (32) is configured to determine a recommendation for a change in the sitting posture depending on the detected history of the sitting posture and/or wherein the display device (36) is configured to display the temporal history of the determined sitting posture.

7. The seating system (10) according to any one of the preceding claims, wherein the seating system (10) comprises a storage device which is configured to store the detected seat load, the determined sitting posture, the history of the detected seat load, the history of the determined sitting posture and/or respective recommendations for a change in the sitting posture and the display device (36) is configured to display the stored seat load, the stored sitting posture, the stored history of the detected seat load, the stored history of the determined sitting posture and/or respective recommendations for a change in the sitting posture.

8. The seating system (10) according to any one of the preceding claims, wherein a respective recommendation for the change in the sitting posture comprises a change to another sitting posture, a change to a new sitting posture, in particular to a predetermined sitting posture and/or to a new sitting posture ascertained depending on the previous sitting posture of the passenger (22), leaving the seat (12) and/or a sequence of movements.

9. The seating system (10) according to any one of the preceding claims, wherein the sensor device (24) is configured to detect at least one force at two different points as the seat load.

10. The seating system (10) according to any one of the preceding claims, wherein the sensor device (24) comprises at least one sensor (26) which is arranged in a back part (12), a seat part (14) and/or an armrest (18) of the seat (12), in particular arranged in a recess of a foam layer (82) of the seat (12) and/or as a sensor layer between the foam layer (82) and a cover layer (80) of the seat (12).

11. The seating system (10) according to any one of the preceding claims, wherein the seating system (10) comprises a data processing module, in particular configured as an A/D converter, by means of which sensor data of the sensor device (24) are converted for processing by the evaluation device (32) and/or for display by the display device (36), in particular from an analog sensor signal into a digital sensor signal.

12. The seating system (10) according to any one of the preceding claims, wherein the seating system (10) is configured for wired data transmission between the sensor device (24), the display device (36), the evaluation device (32) and/or the storage device, in particular configured for connection to data transmission via a data transmission network of the infotainment system, and/or wherein the seating system (10) is configured for wireless data transmission between the sensor device (24), the display device (36), the evaluation device (32) and/or the storage device, in particular configured by means of the Bluetooth standard, the Bluetooth low energy standard, by means of WLAN, in particular in specific frequency bands, and/or by means of RFID.

13. A method for operating a seating system (10) in a passenger aircraft, comprising at least the steps of:
- detecting a seat load on an aircraft seat (12) in a passenger aircraft by a passenger (22) sitting thereon by means of a sensor device (24) and recording a temporal history of the detected seat load,
- determining a sitting posture of the passenger (22) and the temporal history of the sitting posture of the passenger (22) depending on the detected seat load,
- determining a recommendation for a change in a sitting posture of the passenger (22) depending on the detected seat load, the detected history of the seat load, the determined sitting posture and the determined history of the sitting posture, and
- displaying the recommendation on a display device (36);
wherein the sensor device (24) comprises at least one sensor (26) configured as a textile surface sensor which detects a force acting thereon by a change in a capacitance.

14. - The method according to claim 13, wherein a respective recommendation for the change in the sitting posture comprises a change to another sitting posture, a change to a new sitting posture and/or to a new sitting posture ascertained depending on the previous sitting posture of the passenger (22), leaving the seat (12) and/or a sequence of movements.

## Revendications

1. Système de siège (10) pour un avion de passagers, comprenant
- au moins un siège d'avion (12) avec au moins un dispositif capteur (24), qui est conçu pour détecter une charge de siège du siège d'avion (12) par un passager (22) assis dessus et pour enregistrer une évolution au cours du temps de la charge de siège détectée,
- un dispositif d'évaluation (32) qui est conçu pour déterminer une position assise en fonction de la charge de siège détectée et pour déterminer une recommandation pour une modification d'une position assise en fonction de la charge de siège détectée, de la position assise déterminée et de l'évolution détectée de la charge de siège, et
- un appareil indicateur (36), qui est conçu pour afficher la recommandation;
dans lequel le dispositif capteur (24) comprend au moins un capteur (26) conçu comme un capteur de surface textile, qui détecte une force agissant sur lui par une variation de capacité.

2. Système de siège (10) selon la revendication 1, dans lequel l'appareil indicateur (36) est conçu sous forme d'un appareil terminal mobile, en particulier d'un smartphone (34), du passager (22), sous forme d'écran d'un système d'infotainment, qui est associé au siège respectif, et/ou sous forme d'écran d'un système de commande de cabine.

3. Système de siège (10) selon l'une des revendications 1 ou 2, dans lequel le dispositif d'évaluation (32) est conçu sous forme d'appareil terminal mobile, en particulier de smartphone (34), du passager, sous forme d'unité de calcul d'un système d'infotainment qui est associé au siège d'avion respectif (12), et/ou sous forme d'unité de calcul d'un système de commande de cabine.

4. Système de siège (10) selon l'une des revendications précédentes, dans lequel le au moins un appareil indicateur (36) est conçu pour indiquer graphiquement la position assise déterminée par le dispositif d'évaluation (32).

5. Système de siège (10) selon l'une des revendications précédentes, dans lequel l'appareil indicateur (36) est conçu pour indiquer l'évolution au cours du temps de la charge de siège détectée.

6. Système de siège (10) selon l'une des revendications précédentes, dans lequel le dispositif d'évaluation (32) est conçu pour déterminer une évolution au cours du temps de la position assise du passager (22) en fonction de l'évolution de la charge de siège détectée, et le dispositif d'évaluation (32) est conçu en fonction de l'évolution de la position assise détectée, pour déterminer une recommandation pour une modification de la position assise, et/ou dans lequel l'appareil indicateur (36) est conçu pour indiquer l'évolution au cours du temps de la position assise déterminée.

7. Système de siège (10) selon l'une des revendications précédentes, dans lequel le système de siège (10) comprend un appareil de mémorisation qui est conçu pour mémoriser la charge de siège détectée, la position assise déterminée, l'évolution de la charge de siège détectée, l'évolution de la position assise déterminée et/ou des recommandations respectives pour la modification de la position assise, et l'appareil indicateur (36) est conçu pour indiquer la charge de siège mémorisée, la position assise mémorisée, l'évolution mémorisée de la charge de siège détectée, l'évolution mémorisée de la position assise déterminée et/ou des recommandations respectives pour la modification de la position assise.

8. Système de siège (10) selon l'une des revendications précédentes, dans lequel une recommandation respective pour la modification de la position assise comprend un passage dans une autre position assise, un passage dans une nouvelle position assise, en particulier dans une position assise prédéterminée, et/ou dans une nouvelle position assise déterminée en fonction de la position assise précédente du passager (22), un abandon du siège (12) et/ou une succession de mouvements.

9. Système de siège (10) selon l'une des revendications précédentes, dans lequel le dispositif capteur (24) est conçu pour détecter au moins une force à deux endroits différents en tant que charge de siège.

10. Système de siège (10) selon l'une des revendications précédentes, dans lequel le dispositif capteur (24) comprend au moins un capteur (26) qui est disposé dans une partie de dossier (12), une partie de siège (14) et/ou un accoudoir (18) du siège (12), en particulier dans un évidement d'une couche de mousse (82) du siège (12) et/ou comme couche de capteur entre la couche de mousse (82) et une couche de couverture (80) du siège (12).

11. Système de siège (10) selon l'une des revendications précédentes, dans lequel le système de siège (10) comprend un module de traitement de données, en particulier conçu comme un convertisseur A/N, au moyen duquel des données de capteur du dispositif capteur (24) sont converties pour le traitement par le dispositif d'évaluation (32) et/ou pour l'indication par l'appareil indicateur (36), en particulier d'un signal de capteur analogique en un signal de capteur numérique.

12. Système de siège (10) selon l'une des revendications précédentes, dans lequel le système de siège (10) est conçu pour une transmission filaire de données entre le dispositif capteur (24), l'appareil indicateur (36), le dispositif d'évaluation (32) et/ou l'appareil de mémorisation, en particulier pour la connexion avec une transmission de données par le biais d'un réseau de transmission de données du système d'infotainment, et/ou dans lequel le système de siège (10) est conçu pour une transmission de données sans fil entre le dispositif capteur (24), l'appareil indicateur (36), le dispositif d'évaluation (32), et/ou l'appareil de mémorisation, en particulier à l'aide de la norme Bluetooth, de la norme Bluetooth Low Energy, à l'aide d'un WLAN, en particulier dans des bandes de fréquences déterminées, et/ou à l'aide de la RFID.

13. Procédé pour faire fonctionner un système de siège (10) dans un avion de passagers, comprenant au moins les étapes:
- détection d'une charge de siège d'un siège d'avion (12) dans un avion de passagers par un passager (22) assis dessus au moyen d'un dispositif capteur (24) et enregistrement d'une évolution au cours du temps de la charge de siège détectée,
- détermination d'une position assise du passager (22) et de l'évolution au cours du temps de la position assise du passager (22) en fonction de la charge de siège détectée,
- détermination d'une recommandation pour une modification d'une position assise du passager (22) en fonction de la charge de siège détectée, de l'évolution détectée de la charge de siège, de la position assise déterminée et de l'évolution de la position assise déterminée, et
- indication de la recommandation sur un appareil indicateur (36);
dans lequel le dispositif capteur (24) comprend au moins un capteur (26) conçu comme un capteur de surface textile, qui détecte une force agissant sur lui par une variation de capacité.

14. Procédé selon la revendication 13, dans lequel une recommandation respective pour la modification de la position assise comprend un passage dans une autre position assise, un passage dans une nouvelle position assise et/ou dans une nouvelle position assise déterminée en fonction de la position assise précédente du passager (22), un abandon du siège (12) et/ou une succession de mouvements.
